# FASCICULE DE BREVET EUROPEEN

(11) **EP 3 729 141 B1**
(45) Date de publication et mention de la délivrance du brevet: **26.02.2025**
(21) Numéro de dépôt: 18836283.4
(22) Date de dépôt: 18.12.2018
(51) Int. Cl.: G01T 1/167

(54) **PROCEDE DE DETERMINATION D'UNE QUANTITE D'UN RADIO-ISOTOPE**
VERFAHREN ZUR BESTIMMUNG EINER QUANTITÄT EINES RADIO-ISOTOPES
METHOD OF DETERMINING A QUANTITY OF A RADIO-ISOTOPE

(30) Priorité: 21.12.2017 FR 1762878
(43) Date de publication de la demande: 28.10.2020
(73) Titulaire: Orano Recyclage, 92320 Châtillon (FR)
(72) Inventeur: JEHANNO, Jacky, 30330 GAUJAC (FR)
(74) Mandataire: Brevalex
(86) Numéro de dépôt international: PCT/FR2018/053358
(87) Numéro de publication internationale: WO 2019/122674

(56) Documents cités:
- EP-A1- 0 130 099
- WO-A1-00/42446
- WO-A1-2014/145460
- US-A1- 2006 231 768
- US-A1- 2014 019 094
- US-B2- 6 791 093

## Description

### DOMAINE TECHNIQUE

La présente invention concerne un procédé de détermination d'une quantité d'un premier radio-isotope contenu dans un terme source. En particulier, la présente invention met en oeuvre une mesure par spectroscopie gamma pour la détermination de la masse de premier radio-isotope, le premier étant notamment du plutonium 241.

### ART ANTÉRIEUR

Les déchets radioactifs, et en particulier les colis de déchets technologiques radioactifs, sont généralement assemblés dans des fûts en vue de leur stockage.

Ces déchets technologiques sont issus de l'exploitation des ateliers et usines de l'industrie nucléaire, par exemple, des ateliers de fabrication de combustibles nucléaires mettant en oeuvre des matières nucléaires telles que de l'uranium et / ou du plutonium, notamment pour la fabrication de combustible « MOX » (pour « Mixed oxide »). Ainsi, des déchets technologiques issus de tels ateliers, par exemple des gants, des manches, ou tout autre objet en polymère organique ou plus précisément en polyéthylène et utilisés dans les boîtes à gants, sont susceptibles de contenir de faibles quantités de plutonium résiduel et d'autres radio-isotopes.

Aussi, en fonction de la masse et de la nature (niveau de radioactivité et période) de radio-isotopes contenus dans les fûts, ces derniers sont stockés soit en surface soit en profondeur. On peut, dans une certaine mesure, distinguer les fûts « pauvres » des fûts « riches » en radio-isotopes qui peuvent être stockés, respectivement, en surface ou en profondeur.

Le coût d'un stockage en profondeur étant très supérieur à celui d'un stockage en surface, il convient alors d'optimiser l'assemblage des colis de déchets dans les fûts de manière à minimiser leur teneur en radio-isotopes, et donc en premier lieu de bien savoir différencier les colis « riches » des colis « pauvres » en radio-isotopes.

Les mesures de comptage neutronique sont alors une méthode de choix pour l'évaluation de la masse des radio-isotopes, et plus particulièrement de plutonium résiduel, dans les colis de déchets.

Cependant, ce type de mesure n'est pas satisfaisant.

En effet, afin d'atteindre une précision acceptable, les mesures neutroniques nécessitent un temps de comptage relativement long (au moins 900 secondes) par colis. La gestion des colis, ainsi que leur assemblage en fûts s'en trouvent alors affectés tant en termes de temps de cycle que de coût.

Par ailleurs, les mesures de comptage neutronique sont onéreuses.

Le document US 6791093 divulgue un procédé de détermination d'une quantité d'un premier radio-isotope d'un terme source contenu dans un colis, ledit premier radio isotope est susceptible d'émettre une première raie gamma, une seconde raie gamma est également susceptible d'être émise. Les raies gamma sont susceptibles d'être atténués par la matrice du colis et le terme source lui-même. Une correction est appliquée à l'intensité des raies gamma émises par énergie.

Le document WO00/42446A1 divulgue différentes techniques de correction connues dans l'art, notamment la technique du calcul de rapport avec et sans atténuation : « differential peak absorption based correction » sur la base d'un rapport des émissions gamma d'une énergie par des émissions gamma d'une autre énergie en l'absence d'atténuation. Le rapport est comparé avec le résultat mesuré (le rapport actuel) pour en déduire un facteur de correction pour l'atténuation. Une source de transmission est également utilisée pour déterminer les effets d'atténuation.

Un but de la présente invention est alors de proposer une méthode d'évaluation de la masse de radio-isotopes, notamment contenus dans un colis, permettant d'optimiser la conception et la gestion des fûts de déchets.

Un autre but de la présente invention est de proposer une méthode d'évaluation de la masse de radio-isotopes présentant un coût inférieur aux méthodes connues de l'état de la technique.

### EXPOSÉ DE L'INVENTION

Les buts de l'invention sont, au moins en partie, atteints par un procédé de détermination d'une quantité d'un premier radio-isotope d'un terme source contenu dans un colis, selon la revendication 1, ledit premier radio-isotope est susceptible d'émettre une première raie gamma, une seconde raie gamma est également susceptible d'être émise soit par le premier radio-isotope soit par un second radio-isotope du terme source, la première raie gamma et la seconde raie gamma sont susceptibles d'être atténuées, chacun selon un taux d'atténuation différent, par la matrice du colis et le terme source lui-même, le procédé comprenant les étapes suivantes :
a) une étape de mesure, par au moins un détecteur gamma et selon deux positions diamétralement opposées par rapport au colis, des comptages nets associés aux première et seconde raies gamma émises ;
b) connaissant le rapport des comptages des première et seconde raies gamma en l'absence d'atténuation et à partir des résultats de l'étape a), une étape de détermination des taux d'atténuation des première et secondes raies gamma par la matrice du colis ;
c) une étape de détermination, à partir du taux d'atténuation de l'une ou l'autre des première et seconde raies gamma déterminé à l'étape b), de la quantité, avantageusement la masse, de premier radio-isotope contenu dans le terme source.

Il est entendu que les comptages relatifs des première et seconde raies gamma en l'absence d'atténuation de l'étape b) sont des comptage théoriques.

Selon un mode de mise en oeuvre, la seconde raie gamma est émise par le second radio-isotope, et le procédé comprenant également une étape a1) de détermination du rapport théorique des comptages entre la première et la seconde raies gamma émises par les premier et second radio-isotopes en l'absence d'atténuation.

La réalisation d'une telle étape a1) peut nécessiter la connaissance de la composition isotopique à date de mesure.

Selon un mode de mise en oeuvre, les rapports des émissions des première et seconde raies gamma sont stables dans le temps.

Selon un mode de mise en oeuvre, les raies d'émissions considérées peuvent être issues d'un seul et même radioélément auquel cas le rapport théorique des comptages en l'absence d'écran sera constant dans le temps.

Selon un mode de mise en oeuvre, le second radio isotope est le fruit de la désintégration radio active du premier radio isotope.

Selon un mode de mise en oeuvre, le temps de demi-vie T2 du second radio-isotope est très inférieur au temps de demi-vie T1 du premier radio-isotope.

Selon un mode de mise en oeuvre, le terme source comprend en outre un troisième radio-isotope, de même nombre de masse que le premier radio-isotope, la composition isotopique entre les premier et second radio-isotopes étant connue.

Selon un mode de mise en oeuvre, le procédé comprend une détermination de la composition isotopique.

Selon un mode de mise en oeuvre, le procédé comprend en outre une étape de détermination d'un coefficient de conversion (coups/seconde/gramme) de l'un ou l'autre des premier et second radio-isotopes pour le comptage de l'une ou l'autre des première et seconde raie gamma.

Selon un mode de mise en oeuvre, le coefficient de conversion est également déterminé à partir de la distance D de l'au moins un détecteur gamma par rapport au terme source.

Selon un mode de mise en oeuvre, lequel le taux d'atténuation de l'une ou l'autre de première et seconde raies gamma est représentatif d'un écran équivalent comprenant un mélange de polyéthylène et d'uranium caractéristique de la matrice du colis, ledit écran équivalent étant caractérisé par une épaisseur, dite épaisseur d'écran, et une teneur en polyéthylène.

Selon un mode de mise en oeuvre, l'étape a) est réalisée avec deux détecteurs gamma de sorte que deux estimations de la quantité, avantageusement la masse, de premier radio-isotope du terme source sont obtenues à l'issue de l'étape c).

Selon un mode de mise en oeuvre, dès lors que le rapport des deux estimations traduit un excentrage du terme source par rapport aux détecteurs gamma, la moyenne desdites estimations est corrigée d'un coefficient de correction.

Selon un mode de mise en oeuvre, le premier radio-isotope comprend du plutonium 241, le second radio-isotope de l'uranium 237, et le troisième radio-isotope de l'américium 241.

L'invention concerne également un dispositif de mesure adapté pour mettre en oeuvre le procédé de détermination d'une quantité d'un premier radio-isotope contenu dans un terme source selon la présente invention, selon la revendication 14, le dispositif comprenant :
- au moins un détecteur gamma ;
- une station d'accueil du terme source, la station d'accueil étant pourvue d'une balance ;
- un calculateur destiné à traiter des comptages de raies gamma collectés par les détecteurs gamma, ledit calculateur étant également pourvu d'un programme d'ordinateur adapté pour déterminer, à partir des comptages de rayons gamma collectés, la quantité de premier radio-isotope comprise dans le terme source.

### BRÈVE DESCRIPTION DES DESSINS

D'autres caractéristiques et avantages apparaîtront dans la description qui va suivre du procédé de détermination d'une quantité d'un premier radio-isotope contenu dans un terme source selon l'invention, donnés à titre d'exemples non limitatifs, en référence aux dessins annexés dans lesquels :
- la figure 1 est une représentation d'un dispositif de mesure susceptible d'être mis en oeuvre pour la détermination d'une quantité d'un premier radio-isotope d'un terme source selon la présente invention ;
- la figure 2 est une représentation graphique du taux d'atténuation (axe vertical, en cm⁻¹) d'un mélange contenant du polyéthylène et de l'uranium en fonction de la longueur du rayonnement gamma (axe horizontal, en KeV), en particulier, les courbes A, B et C représentent l'atténuation du rayonnement gamma, respectivement, de l'uranium pur, d'un mélange 50/50 uranium-polyéthylène, et de polyéthylène pur;
- la figure 3 est une représentation schématique d'un terme source contenu dans un colis et d'un détecteur gamma pris comme exemple pour la détermination d'un coefficient correctif.

### EXPOSÉ DÉTAILLÉ DE MODES DE RÉALISATION PARTICULIERS

La présente invention met en oeuvre une mesure par spectroscopie gamma pour l'estimation d'une quantité d'un premier radio-isotope d'un terme source contenu dans un colis.

Par « terme source », on entend la nature et la quantité de produits radioactifs.

L'estimation de la quantité ou de la masse de premier radio-isotope est alors basée sur une mesure des intensités relatives de deux raies gamma émises respectivement par les premier et second radio-isotopes et corrigées d'un taux d'atténuation desdites raies par la matrice formée par le colis.

L'invention est alors particulièrement adaptée pour l'estimation de masse de plutonium 241 d'un terme source contenu, en particulier, dans un colis de déchets contenant de objets en polyéthylène contaminés par un mélange d'oxydes de plutonium et d'uranium

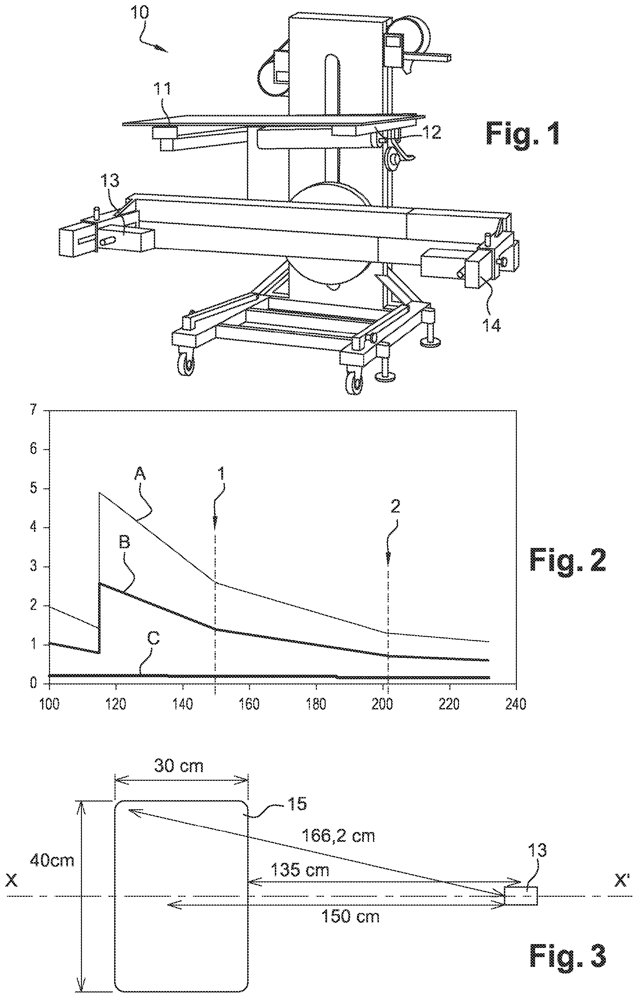

A la figure 1, on peut voir un dispositif 10 susceptible d'être mis en oeuvre dans le cadre de la présente invention.

Le dispositif de mesure 10 comprend alors une station d'accueil 11, éventuellement pourvue d'une balance 12 destinée à mesurer la masse d'un colis.

Le dispositif de mesure 10 comprend également au moins un détecteur gamma (aussi appelé détecteur de rayonnement gamma), par exemple deux détecteurs gamma 13 et 14, agencés pour mesurer un rayonnement gamma émis par un colis contenant un terme source et positionné sur la station d'accueil 12.

Les deux détecteurs gamma 13 et 14 sont, par exemple, positionnés de part et d'autre du terme source (en d'autres termes diamétralement opposés par rapport au colis).

Un détecteur gamma 13, 14 peut alors comprendre une pluralité de sous unités (par exemple 4 sous unités) de détection du type CZT.

Le dispositif de mesure 10 peut également être doté d'un ordinateur ou d'un calculateur qui comprend un programme d'ordinateur.

Le programme d'ordinateur est alors destiné à traiter des comptages de rayonnement gamma collectés par le ou les détecteurs gamma de manière à déterminer la quantité de premier radio-isotope comprise dans le terme source selon une méthode détaillée dans la suite de la présente description.

Le terme source peut être compris dans un colis, ou un fût de déchets radioactifs contaminés par des éléments radioactifs, et en particulier contaminés par le premier radio-isotope.

Les déchets contaminés peuvent comprendre des gants, des manches, ou tout autre déchet fait par exemple de matière polymère organique assimilée dans toute la suite de l'énoncé à du polyéthylène.

Le colis forme ainsi une matrice au sein de laquelle se mêlent la matière polymère organique et les éléments radioactifs.

Selon un premier mode de réalisation de la présente invention, les éléments radioactifs peuvent comprendre en particulier le premier radio-isotope et, éventuellement, un second radio-isotope.

Une première raie gamma est émise par le premier radio-isotope.

Une seconde raie est également émise soit par le premier radio-isotope soit par le second radio-isotope dès lors que ce dernier est considéré.

Toute la suite de la description, il sera considéré que la seconde raie gamma est émise par le second radio-isotope. L'homme du métier, partant de la présente description, pourra adapter cette dernière au cas des première et seconde raies gamma émises par un unique radio-isotope, en l'occurrence le premier radio-isotope.

Les comptages de la première raie gamma et de la seconde raie gamma sont exécutés par les détecteurs 13 et 14.

Le second radio-isotope peut être le fruit de la désintégration du premier radio-isotope selon un premier taux de conversion (le taux de conversion est aussi appelé facteur d'embranchement « Γ »). Toutefois, la portée de l'invention ne doit pas être limitée à cet aspect et des premier et second radio-isotopes sans filiation peuvent être considérés.

Eventuellement, les déchets radioactifs peuvent également comprendre au moins un troisième radio-isotope, notamment un troisième radio-isotope de même nombre de masse que le premier radio-isotope. Les premier et troisième radio-isotopes forment ainsi un mélange dont les proportions massiques respectives, appelées dans la suite de l'énoncé « composition isotopique », sont supposées connues pour la mise en oeuvre du procédé de détermination de la quantité de premier radio-isotope.

La composition isotopique du mélange constitué du premier et du troisième radio-isotopes peut être déterminée par application d'une loi de décroissance radioactive desdits radio-isotopes et la considération de l'âge du mélange.

Il sera admis dans toute la suite de l'énoncé que les éléments radioactifs comprennent le premier, le second et le troisième radio-isotopes, et que la composition isotopique entre les premier et troisième radio-isotopes est connue. Cependant, la mise en oeuvre de la présente invention n'implique pas nécessairement la présence du troisième isotope.

A titre d'exemple, le premier radio-isotope est le plutonium 241 qui émet une première raie gamma à 148 KeV, tandis que le second radio-isotope, obtenu par désintégration α du premier radio-isotope, est l'uranium 237 qui, quant à lui, émet une seconde raie gamma à 208 KeV. Dans cet exemple, le plutonium 241 se désintègre, par émission d'un rayonnement de type β, en américium 241 qui forme le troisième radio-isotope.

Les comptages des première et seconde raies gamma collectés par le ou les détecteurs gamma permettent en théorie d'estimer la quantité de premier radio-isotope contenue dans le terme source.

Cependant, les comptages sont généralement atténués par la matrice du colis et par des phénomènes d'auto-absorption plus ou moins importants dépendant de la masse et de la géométrie du terme source. En d'autres termes, le colis dans son ensemble (la matrice et le terme source) forme un écran aux rayonnements gamma caractérisé, pour chacune des longueurs d'onde des rayonnements gamma, par un taux d'atténuation.

Aussi, de manière particulièrement avantageuse, les taux d'atténuation des première et seconde raies gamma, dits respectivement, premier taux d'écrantage et second taux d'écrantage sont différents.

A cet égard, la figure 2 est une représentation graphique du taux d'atténuation du rayonnement gamma pour un mélange constitué de polyéthylène et d'uranium. En particulier, les positions 1 et 2 sur la figure 2 indiquent des taux d'atténuation pour un écran donné, respectivement, de la première raie gamma et de la seconde raie gamma qui sont différents. Ainsi, la connaissance des densités du polyéthylène et de l'uranium, ainsi que de leurs coefficients d'absorption respectifs des première et seconde raies gamma, permet d'établir les taux d'atténuation desdites raies en fonction des proportions respectives de polyéthylène et d'uranium et de l'épaisseur d'écran.

Le procédé selon la présente invention comprend alors une étape a1) de détermination du rapport théorique des comptages entre la première et la seconde raies gamma émises par les premier et second radio-isotopes en l'absence d'écrantage.

Il est entendu que les comptages sont des comptages théoriques au niveau du ou des détecteurs, et tiennent compte du rendement du détecteur à l'énergie considérée, du nombre de sous-unités de détection, mais également de la composition isotopique dès lors :
- que le troisième radio-isotope est considéré
- et / ou que les raies d'émission prises en compte sont issues de deux radioéléments qui ne sont pas en filiation.

En particulier, le rendement et le nombre de sous-unités de détection permet de déterminer un coefficient de conversion c/s/g pour l'une et/ou l'autre des première et seconde raies gamma et associé au premier radio-isotope.

Par « coefficient de conversion c/s/g », on entend un coefficient dénombrant le nombre de coups d'une raie gamma donnée par unité de temps et unité de masse du premier radio-isotope (donc de la masse du terme source).

Par conséquent, dès lors que le comptage corrigé de l'une ou l'autre des première et seconde raie gamma est connu, la masse du premier radio-isotope correspond au comptage corrigé de l'une ou l'autre des première et seconde raies gamma divisé par le coefficient de conversion c/s/g de la raie gamma considérée et du temps de mesure par le détecteur gamma.

Par « comptage corrigé d'une raie gamma », on entend le nombre de coups qui serait restitué par le détecteur en l'absence d'écran. En d'autres termes, le comptage corrigé ne tient compte d'aucune atténuation par l'écran.

La suite de l'exposé de l'invention se limitera au cas de la seconde raie gamma.

La connaissance des proportions relatives des premier et second radio-isotopes permet de pondérer le comptage théorique par unité de temps et par unité de masse, en l'absence d'écrantage, des première et seconde raies gamma.

Les proportions relatives des premier et second radio-isotopes sont alors accessibles, par exemple, par application d'une loi de décroissance radioactive impliquant les temps de demi-vie T1 et T2, respectivement, du premier radio-isotope et du second radio-isotope.

De manière avantageuse, dès lors qu'il y a filiation entre les premier et second radio-isotopes et que la période radioactive du fils est très inférieure à celle du père, leurs activités sont similaires auquel cas le rapport théorique des comptages est constant dans le temps.

Le procédé selon la présente invention comprend également une étape a) de mesure par l'au moins un détecteur gamma, des comptages nets associés aux première et seconde raies gamma émises, respectivement, par les premier et second radio-isotopes contenus dans le terme source. La mesure est avantageusement effectuée selon deux positions diamétralement opposées par rapport au colis.

Il est entendu que les comptages nets associés aux première et seconde raies gamma correspondent aux comptages réels atténués.

De manière avantageuse, l'étape a) met en oeuvre les deux détecteurs gamma 13 et 14.

La mesure peut comprendre la collecte du ou des rayonnements gamma pendant une durée de collecte prédéterminée comprise, par exemple, entre 45 secondes et 60 secondes, notamment 45 secondes.

Le comptage net peut être obtenu à partir d'un comptage brut déduit du bruit de fond, effectivement mesuré par le détecteur gamma, ajusté d'un temps mort au cours duquel ledit détecteur gamma ne collecte pas au maximum de sa capacité le rayonnement gamma.

L'étape a) peut comprendre également le calcul du rapport des comptages nets des seconde et première raies gamma.

L'étape a) est alors suivie d'une étape b) de détermination d'un taux d'atténuation des première et secondes raies gamma par la matrice du terme source.

A cet égard, le rapport de comptage net, mesuré à l'étape a), permet de déterminer le taux d'atténuation de l'écran formé par la matrice.

Cette opération, qui peut être automatisée au niveau du programme d'ordinateur, reprend les paramètres permettant d'établir le graphique de la figure 2.

Lesdits paramètres comprennent alors les densités respectives du polyéthylène, de l'uranium, des coefficients d'absorption de l'uranium et du polyéthylène aux énergies respectives des première et seconde raies gamma.

Le programme d'ordinateur peut comprendre un solveur mathématique qui, par une méthode itérative et à partir du rapport de comptages nets des première et seconde raies gamma, permet de déterminer la teneur en polyéthylène (en pourcentage) de l'écran, l'épaisseur d'écran et le taux d'atténuation pour chacune des deux raies gamma considérées.

Cette étape de résolution mathématique connue de l'homme du métier n'est pas décrite dans la présente invention.

En outre, le rapport du comptage net de la seconde raie gamma par le taux d'atténuation ainsi déterminé permet d'accéder au comptage corrigé de ladite seconde raie gamma précédemment défini.

Enfin, le procédé selon la présente invention comprend une étape c) de détermination de la masse de premier radio-isotope compris dans le terme source.

Cette étape c) peut alors comprendre dans un premier temps le calcul du comptage corrigé associé à la seconde raie gamma. Par exemple, le comptage corrigé (de l'atténuation par l'écran équivalent) de la seconde raie gamma correspond au comptage net de ladite seconde raie par le détecteur divisé par l'atténuation exercée par l'écran (divisé par le taux d'atténuation à l'énergie considérée).

Ainsi, la masse de premier radio-isotope contenue dans le terme source est alors déterminée en divisant le comptage corrigé associé à la seconde raie gamma par le produit formé par le temps de mesure et le coefficient de conversion c/s/g.

Dans le cas d'un colis volumineux, le point « chaud » principal peut être excentré par rapport audit terme source, et générer une erreur d'estimation de comptage des première et seconde raies gamma.

Par « point « chaud » principal », on entend la zone du terme source la plus radiative.

Aussi, dès lors que le procédé met en oeuvre deux détecteurs gamma 13 et 14, deux estimations du comptage de la seconde raie gamma sont obtenues. Un écart par rapport à 1 du rapport de ces deux estimations traduit un excentrage du point chaud principal.

Afin de pallier ce problème, le solveur intègre une table de correction de la valeur moyenne de la masse estimée en fonction des rapports des estimations de la masse de premier radio-isotope pour chacun des détecteurs.

A cet égard, le tableau suivant présente une méthode de détermination du coefficient correcteur. Dans cet exemple, le terme source, ici considéré comme ponctuel, est supposé émettre 100 coups, et deux détecteurs gamma sont disposés symétriquement de part et d'autre du terme source 15 et en alignement selon un axe XX' (figure 3).

| Moyenne | Rapport C | coef | min | max | d0° | d180° | Excentrage cm |
|---|---|---|---|---|---|---|---|
| 100 | 1,03 | 1,000 | 99 | 101 | 151 | 149 | 1 |
| 100 | 1,05 | 1,001 | 97 | 103 | 152 | 148 | 2 |
| 100 | 1,08 | 1,001 | 96 | 104 | 153 | 147 | 3 |
| 100 | 1,11 | 1,002 | 95 | 106 | 154 | 146 | 4 |
| 100 | 1,14 | 1,003 | 94 | 107 | 155 | 145 | 5 |
| 100 | 1,17 | 1,005 | 92 | 109 | 156 | 144 | 6 |
| 101 | 1,21 | 1,007 | 91 | 110 | 157 | 143 | 7 |
| 101 | 1,24 | 1,009 | 90 | 112 | 158 | 142 | 8 |
| 101 | 1,27 | 1,011 | 89 | 113 | 159 | 141 | 9 |
| 101 | 1,31 | 1,013 | 88 | 115 | 160 | 140 | 10 |
| 102 | 1,34 | 1,016 | 87 | 116 | 161 | 139 | 11 |
| 102 | 1,38 | 1,019 | 86 | 118 | 162 | 138 | 12 |
| 102 | 1,42 | 1,023 | 85 | 120 | 163 | 137 | 13 |
| 103 | 1,45 | 1,027 | 84 | 122 | 164 | 136 | 14 |
| 103 | **1,49** | 1,031 | 83 | 123 | 165 | 135 | 15 |
| 103 | 1,53 | 1,035 | 82 | 125 | 166 | 134 | 16 |
| 104 | 1,58 | 1,039 | 81 | 127 | 167 | 133 | 17 |
| 104 | **1,62** | 1,044 | 80 | 129 | 168 | 132 | 18 |
| 105 | **1,66** | 1,049 | 79 | 131 | 169 | 131 | 19 |

La colonne « excentrage cm » correspond à des excentrages du point chaud principal par rapport au centre du terme source 15.

Les colonnes « d0° » et « d180° » correspondent aux distances du point chaud principal par rapport aux détecteurs gamma.

Les colonnes « min » et « max » correspondent, respectivement, aux comptages effectifs de chacun des détecteurs gamma. Les colonnes « Moyenne » et « Rapport C » sont, respectivement, les moyennes et les rapports des colonnes « min » et « max ».

La colonne « coef » est le rapport des données de la colonne « Moyenne » et du comptage corrigé (100 coups dans le cas présent), et correspond au coefficient correctif à appliquer dès lors que le rapport des estimations des deux détecteurs gamma traduit un excentrage du point chaud principal.

L'estimation de l'excentrage peut également faire appel à d'autres modèles, par exemple en considérant un terme source linéaire, que l'homme du métier, avec ses connaissances générales, est à même de mettre en oeuvre.

La présente invention permet alors de mesurer, dans des temps raisonnables, la masse de premier radio-isotope contenu dans un terme source.

Ce temps de mesure limite alors l'exposition des personnes aux rayonnement, mais permet également de raccourcir les temps de cycles nécessaire de gestion et d'assemblage de termes source en fûts de déchet.

La présente invention concerne également le dispositif de mesure 10 adapté pour la mise en oeuvre pour la détermination d'une quantité d'un premier radio-isotope contenu dans un terme source, le dispositif comprenant :
- au moins deux détecteur gamma 13 et 14;
- une station d'accueil 11 du terme source, la station d'accueil étant pourvue d'une balance 12 ;
- un calculateur 15 destiné à traiter des comptages de rayons gamma collectés par les détecteurs gamma, ledit calculateur étant également pourvu d'un programme d'ordinateur adapté pour déterminer, à partir des comptage de rayons gamma collectés, la quantité de premier radio-isotope comprise dans le terme source.

## Revendications

1. Procédé de détermination d'une quantité d'un premier radio-isotope d'un terme source contenu dans un colis, ledit premier radio-isotope est susceptible d'émettre une première raie gamma, une seconde raie gamma est également susceptible d'être émise soit par le premier radio-isotope soit par un second radio-isotope du terme source, la première raie gamma et la seconde raie gamma sont susceptibles d'être atténuées, chacun selon un taux d'atténuation différent, par la matrice du colis et le terme source lui-même, le procédé comprenant les étapes suivantes :
a) une étape de mesure, par au moins un détecteur gamma (13, 14) et selon deux positions diamétralement opposées par rapport au colis, des comptages nets associés aux première et seconde raies gamma émises ;
b) connaissant le rapport des comptages des première et seconde raies gamma en l'absence d'atténuation et à partir des résultats de l'étape a), une étape de détermination des taux d'atténuation des première et secondes raies gamma par la matrice du colis ;
c) une étape de détermination, à partir du taux d'atténuation de l'une ou l'autre des première et seconde raies gamma déterminé à l'étape b), de la quantité, avantageusement la masse, de premier radio-isotope contenu dans le terme source.

2. Procédé selon la revendication 1, dans lequel la seconde raie gamma est émise par le second radio-isotope, et le procédé comprenant également une étape a1) de détermination du rapport théorique des comptages entre la première et la seconde raies gamma émises par les premier et second radio-isotopes en l'absence d'atténuation.

3. Procédé selon la revendication 2, dans lequel les rapports des émissions des première et seconde raies gamma sont stables dans le temps.

4. Procédé selon la revendication 2 ou 3, dans lequel le second radio isotope est le fruit de la désintégration radio active du premier radio isotope.

5. Procédé selon l'une des revendications 2 à 4, dans lequel le temps de demi-vie T2 du second radio-isotope est très inférieur au temps de demi-vie T1 du premier radio-isotope.

6. Procédé selon l'une des revendications 2 à 5, dans lequel le terme source comprend en outre un troisième radio-isotope, de même nombre de masse que le premier radio-isotope, la composition isotopique entre les premier et second radio-isotopes étant connue.

7. Procédé selon la revendication 6, dans lequel le procédé comprend une détermination de la composition isotopique.

8. Procédé selon la revendication 5 ou 7, dans lequel le procédé comprend en outre une étape de détermination d'un coefficient de conversion (coups/seconde/gramme) de l'un ou l'autre des premier et second radio-isotopes pour le comptage de l'une ou l'autre des première et seconde raies gamma.

9. Procédé selon la revendication 8, dans lequel le coefficient de conversion est également déterminé à partir de la distance D de l'au moins un détecteur gamma par rapport au terme source.

10. Procédé selon l'une des revendications 1 à 9, dans lequel le taux d'atténuation de l'une ou l'autre des première et seconde raies gamma est représentatif d'un écran équivalent comprenant un mélange de polyéthylène et d'uranium caractéristique de la matrice du colis, ledit écran équivalent étant **caractérisé par** une épaisseur, dite épaisseur d'écran, et une teneur en polyéthylène.

11. Procédé selon l'une des revendication 1 à 10, dans lequel l'étape a) est réalisée avec deux détecteurs gamma de sorte que deux estimations de la quantité, avantageusement la masse, de premier radio-isotope du terme source sont obtenues à l'issue de l'étape c).

12. Procédé selon la revendication 11, dans lequel, dès lors que le rapport des deux estimations traduit un excentrage du terme source par rapport aux détecteurs gamma, la moyenne desdites estimations est corrigée d'un coefficient de correction.

13. Procédé selon l'une des revendications 1 à 12 en combinaison avec la revendication 6, dans lequel le premier radio-isotope comprend du plutonium 241, le second radio-isotope de l'uranium 237, et le troisième radio-isotope de l'américium 241.

14. Dispositif de mesure (10) adapté pour mettre en oeuvre le procédé de détermination d'une quantité d'un premier radio-isotope contenu dans un terme source selon l'une des revendications 1 à 13, le dispositif comprenant :
- au moins un détecteur gamma (13, 14) ;
- une station d'accueil (11) du terme source, la station d'accueil étant pourvue d'une balance (12) ;
- un calculateur destiné à traiter des comptages de raies gamma collectés par les détecteurs gamma, ledit calculateur étant également pourvu d'un programme d'ordinateur adapté pour déterminer, à partir des comptages de rayons gamma collectés, la quantité de premier radio-isotope comprise dans le terme source.

## Patentansprüche

1. Verfahren zum Bestimmen einer Menge eines ersten Radioisotops eines Quellterms, das in einem Paket enthalten ist, wobei das erste Radioisotop dazu geeignet ist, eine erste Gammalinie zu emittieren, wobei eine zweite Gammalinie auch dazu geeignet ist, entweder von dem ersten Radioisotop oder von einem zweiten Radioisotop des Quellterms emittiert zu werden, wobei die erste Gammalinie und die zweite Gammalinie dazu geeignet sind, durch die Matrix des Pakets und des Quellterms an sich jeweils gemäß einer unterschiedlichen Abschwächungsrate abgeschwächt zu werden, wobei das Verfahren die folgenden Schritte umfasst:
a) einen Schritt des Messens der Nettozählungen, die mit der ersten und der zweiten emittierten Gammalinien verbunden sind, durch mindestens einen Gammadetektor (13, 14) und in zwei diametral gegenüberliegenden Positionen in Bezug auf das Paket;
b) bei Kenntnis des Verhältnisses der Zählungen der ersten und der zweiten Gammalinie in Abwesenheit einer Abschwächung und anhand der Ergebnisse aus Schritt a), einen Schritt des Bestimmens der Abschwächungsraten der ersten und der zweiten Gammalinie durch die Matrix des Pakets;
c) einen Schritt des Bestimmens der Menge, vorzugsweise der Masse, des ersten Radioisotops, das im Quellterm enthalten ist, anhand der in Schritt b) bestimmten Abschwächungsrate von einer der ersten und der zweiten Gammalinie.

2. Verfahren nach Anspruch 1, wobei die zweite Gammalinie von dem zweiten Radioisotop emittiert wird, und wobei das Verfahren auch einen Schritt a1) des Bestimmens des theoretischen Verhältnisses der Zählungen zwischen der ersten und der zweiten Gammalinie umfasst, die von dem ersten und dem zweiten Radioisotop in Abwesenheit einer Abschwächung emittiert werden.

3. Verfahren nach Anspruch 2, wobei die Emissionsverhältnisse der ersten und der zweiten Gammalinie zeitlich stabil sind.

4. Verfahren nach Anspruch 2 oder 3, wobei das zweite Radioisotop das Produkt des radioaktiven Zerfalls des ersten Radioisotops ist.

5. Verfahren nach einem der Ansprüche 2 bis 4, wobei die Halbwertszeit T2 des zweiten Radioisotops deutlich kürzer ist als die Halbwertszeit T1 des ersten Radioisotops.

6. Verfahren nach einem der Ansprüche 2 bis 5, wobei der Quellterm ferner ein drittes Radioisotop mit derselben Massenzahl wie das erste Radioisotop umfasst, wobei die Isotopenzusammensetzung zwischen dem ersten und dem zweiten Radioisotop bekannt ist.

7. Verfahren nach Anspruch 6, wobei das Verfahren das Bestimmen der Isotopenzusammensetzung umfasst.

8. Verfahren nach Anspruch 5 oder 7, wobei das Verfahren ferner einen Schritt des Bestimmens eines Umrechnungskoeffizienten (Zählrate/Sekunde/Gramm) von einem des ersten und des zweiten Radioisotops zum Zählen von einer der ersten und der zweiten Gammalinie umfasst.

9. Verfahren nach Anspruch 8, wobei der Umrechnungskoeffizient auch anhand des Abstands D des mindestens einen Gammadetektors in Bezug auf den Quellterm bestimmt wird.

10. Verfahren nach einem der Ansprüche 1 bis 9, wobei die Abschwächungsrate von einer der ersten und der zweiten Gammalinie repräsentativ für eine äquivalente Abschirmung ist, die eine Mischung aus Polyethylen und Uran umfasst, die für die Matrix des Pakets kennzeichnend ist, wobei die äquivalente Abschirmung durch eine Dicke, die sogenannte Abschirmungsdicke, und einen Polyethylengehalt gekennzeichnet ist.

11. Verfahren nach einem der Ansprüche 1 bis 10, wobei Schritt a) mit zwei Gammadetektoren durchgeführt wird, so dass nach Schritt c) zwei Schätzungen der Menge, vorteilhafterweise der Masse, des ersten Radioisotops des Quellterms erhalten werden.

12. Verfahren nach Anspruch 11, wobei, sobald das Verhältnis der beiden Schätzungen eine Exzentrizität des Quellterms in Bezug auf die Gammadetektoren widerspiegelt, der Mittelwert der Schätzungen um einen Korrekturkoeffizienten korrigiert wird.

13. Verfahren nach einem der Ansprüche 1 bis 12 in Kombination mit Anspruch 6, wobei das erste Radioisotop Plutonium 241 umfasst, das zweite Radioisotop Uran 237 umfasst und das dritte Radioisotop Americium 241 umfasst.

14. Messvorrichtung (10), die dazu ausgelegt ist, das Verfahren zum Bestimmen einer Menge eines ersten Radioisotops, das in einem Quellterm enthalten ist, nach einem der Ansprüche 1 bis 13 durchzuführen, wobei die Vorrichtung Folgendes umfasst:
- mindestens einen Gammadetektor (13, 14);
- eine Ladestation (11) für den Quellterm, wobei die Ladestation mit einer Waage (12) versehen ist;
- einen Rechner, der dazu bestimmt ist, die Zählungen von Gammalinien, die von den Gammadetektoren gesammelt werden, zu verarbeiten, wobei der Rechner auch mit einem Computerprogramm versehen ist, das dazu ausgelegt ist, anhand der Zählungen der gesammelten Gammalinien die Menge des ersten Radioisotops, die der Quellterm umfasst, zu bestimmen.

## Claims

1. Method for determining a quantity of a first radioisotope of a source term contained in a package, said first radioisotope is suitable for emitting a first gamma line, a second gamma line is also suitable for being emitted either by the first radioisotope or by a second radioisotope of the source term, the first gamma line and the second gamma line are suitable for being attenuated, each according to a different attenuation rate, by the matrix of the package and the source term per se, the method comprising the following steps:
a) a step of measuring, by at least one gamma detector (13, 14) and according to two diametrically opposed positions in relation to the package, net counts associated with the first and second gamma lines emitted;
b) in the knowledge of the ratio of the counts of the first and second gamma lines in the absence of attenuation and based on the results of step a), a step of determining the attenuation rates of the first and second gamma lines by the package matrix;
c) a step of determining, based on the attenuation rate of one or the other of the first and second gamma lines determined in step b), the quantity, advantageously the mass, of first radioisotope contained in the source term.

2. Method according to claim 1, wherein the second gamma line is emitted by the second radioisotope, and the method also comprising a step a1) of determining the theoretical count ratio between the first and the second gamma lines emitted by the first and second radioisotopes in the absence of attenuation.

3. Method according to claim 2, wherein the emission ratios of the first and second gamma lines are stable over time.

4. Method according to claim 2 or 3, wherein the second radioisotope is the result of the radioactive disintegration of the first radioisotope.

5. Method according to one of claims 2 to 4, wherein the half-life T2 of the second radioisotope is substantially less than the half-life T1 of the first radioisotope.

6. Method according to one of claims 2 to 5, wherein the source term further comprises a third radioisotope, of the same mass number as the first radioisotope, the isotopic composition between the first and second radioisotopes being known.

7. Method according to claim 6, wherein the method comprises a determination of the isotopic composition.

8. Method according to claim 5 or 7, wherein the method further comprises a step of determining of a conversion coefficient (count/second/gram) of one or the other of the first and second radioisotopes for counting one or the other of the first and second gamma lines.

9. Method according to claim 8, wherein the conversion coefficient is also determined based on the distance D of the least one gamma detector in relation to the source term.

10. Method according to one of claims 1 to 9, wherein the attenuation rate of one or the other of first and second gamma lines is representative of an equivalent screen comprising a mixture of polyethylene and uranium characteristics of the package matrix, said equivalent screen being **characterised by** a thickness, referred to as screen thickness, and a polyethylene content.

11. Method according to one of steps 1 to 10, wherein step a) is carried out with two gamma detectors such that two estimations of the quantity, advantageously the mass, of first radioisotope of the source term are obtained following step c).

12. Method according to claim 11, wherein, once the radio of the two estimations conveys an offset of the source term in relation to the gamma detectors, the mean of said estimations is corrected by a correction coefficient.

13. Method according to one of claims 1 to 12 combined with claim 6, the first radioisotope comprises plutonium 241, the second radioisotope uranium 237, and the third radioisotope americium 241.

14. Measurement device (10) suitable for implementing the method for determining a quantity of a first radioisotope contained in a source term according to one of claims 1 to 13, the device comprising:
- at least one gamma detector (13, 14);
- a docking station (11) of the source term, the docking station being provided with a scales (12);
- a computer intended to process gamma line counts collected by the gamma detectors, said computer being also provided with a computer program suitable for determining, based on the gamma ray counts, the quantity of first radioisotope comprised in the source term.
